# EUROPÄISCHE PATENTSCHRIFT

(11) **EP 2 307 175 B1**
(45) Veröffentlichungstag und Bekanntmachung des Hinweises auf die Patenterteilung: **26.12.2012**
(21) Anmeldenummer: 09779572.8
(22) Anmeldetag: 28.05.2009
(51) Int. Cl.: B25H 1/00, B23Q 17/22

(54) **HANDWERKZEUGMASCHINE**
PORTABLE POWER TOOL
MACHINE-OUTIL À MAIN

(30) Priorität: 28.07.2008 DE 102008040774
(43) Veröffentlichungstag der Anmeldung: 13.04.2011
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE); HOFFMANN, Ulli, 75223 Niefern-Oeschelbronn (DE); KOEGEL, Jan, Mount Prospect Illinois 60056 (US)
(86) Internationale Anmeldenummer: PCT/EP2009/056518
(87) Internationale Veröffentlichungsnummer: WO 2010/012522

(56) Entgegenhaltungen:
- WO-A2-02/068982
- DE-A1- 10 116 015
- DE-U1- 20 120 529
- DE-U1-202004 018 003
- GB-A- 2 358 926
- US-A- 5 010 652
- US-A1- 2003 226 438
- US-A1- 2004 093 749

## Beschreibung

Die vorliegende Erfindung betrifft eine Handwerkzeugmaschine gemäß dem Oberbegriff des Patentanspruchs 1. Eine derartige Handwerkzeugmaschine geht beispielsweise aus der US 5010652 hervor.

Derartige Hanwerkzeugmaschinen sind im Stand der Technik bekannt und können zum Beispiel eine Stichsäge, eine Fräse, eine Bohrmaschine, ein Tacker oder ein Punktschweißgerät sein. Diesen Handwerkzeugmaschinen ist gemeinsam, dass sie von einem zu bearbeitenden Werkstück unabhängig sind. Zur Bearbeitung des Werkstückes wird die Handwerkzeugmaschine an der gewünschten Bearbeitungsstelle positioniert und gegebenenfalls während der Bearbeitung auf oder an dem Werkstück verschoben. Bei einer punktförmigen Bearbeitung, zum Beispiel durch eine Bohrmaschine oder einen Tacker, wird die Handwerkzeugmaschine einmal ausgerichtet und während der Bearbeitung des Werkstückes nicht verrückt. Im Gegensatz dazu findet beispielsweise bei der Stichsäge oder Fräse die Bearbeitung während eines Verschiebevorgangs des Werkzeuges auf dem Werkstück statt, so dass ein Bediener kontinuierlich mit großer Aufmerksamkeit die Bearbeitung durchführen muss.

Bei der Verwendung derartiger Handwerkzeugmaschinen werde am Werkstück eine oder mehrere Markierungen angebracht, um die Handwerkzeugmaschine für die Bearbeitung zu positionieren. Dazu wird zum Beispiel eine Stelle, an der mit der Bohrmaschine ein Loch gebohrt werden soll, mit einem Stift oder einer Anreißnadel angezeichnet und/oder mit einem Körner markiert. Für eine linienförmige Bearbeitung, wie sie beispielsweise von der Stichsäge durchgeführt wird, wird eine Linie, entlang derer die Bearbeitung des Werkstücks durchgeführt werden soll, auf dem Werkstück angezeichnet oder angerissen, so dass die Handwerkzeugmaschine entlang dieser Linie geführt werden kann.

Da die Handwerkzeugmaschinen üblicherweise frei geführt oder gehalten werden, kann es bei dieser Art der Positionierung leicht zu einer von der Markierung abweichenden Positionierung der Handwerkzeugmaschine und entsprechend zu einer falschen Bearbeitung des Werkstücks kommen. Dieses Risiko kann durch das Aufbringen einer erhöhten Sorgfalt zwar reduziert, aber nie eliminiert werden. Auf jeden Fall führt eine erhöhte Sorgfalt zu einem größeren Zeitaufwand.

Aus der US 5,010,652 ist eine Handwerkzeugmaschine in Form einer Stichsäge bekannt, deren Sägblatt entlang einer auf einem Werkstück aufgebrachten Markierungslinie ausgerichtet werden kann. Dazu besitzt die Vorrichtung der US 5,010,652 eine Lichtquelle zur Beleuchtung des zu bearbeitenden Werkstückes und eine Sensoreinheit in Form von Photowiderständen. Aufgrund der unterschiedlichen Reflexion von Werkstück und einer auf dem Werkstück angebrachten Markierungslinie detektieren die Photowiderstände ein etwaiges Verlassen der Markierungslinie. In diesem Fall wird der Anstellwinkel des Sägeblattes der Stichsäge geändert, um die Werkzeugmaschine wieder auf die Markierungslinie auszurichten.

Ausgehend von diesem Stand der Technik ist es eine Aufgabe der vorliegenden Erfindung, eine Handwerkzeugmaschine zur Verfügung zu stellen, bei dem die Bearbeitungsgenauigkeit und -geschwindigkeit verbessert ist. Diese Aufgabe wird durch eine Handwerkzeugmaschine mit den in Anspruch 1 aufgeführten Merkmalen gelöst. Die Aufgabe ist dadurch getost, dass die Handwerkzeugmaschine mit einer Sen-6DO, soreinheit, die derart ausgebildet ist, dass sie eine auf einem Werkstück vorgesehene Bearbeitungsmarkierung, die eine Soll-Position des Werkzeugs definiert, erfassen kann, und einer Steuereinheit, die basierend auf dem Signalausgang der Sensoreinheit eine Abweichung der Ist-Position von der Soll-Position ermittelt, ausgeführt ist, wobei eine Positioniereinheit vorgesehen ist, die derart ausgebildet ist, dass sie eine automatische Korrektur der Handwerkzeugmaschine von der ist-Position zu der Soll-Position vornimmt.

Ein Grundgedanke der Erfindung besteht mithin darin, die Handwerkzeugmaschine so auszubilden, dass es die Bearbeitungsmarkierung selbsttätig erfasst und die Abweichung von der Bearbeitungsmarkierung ermittelt. Diese Abweichung kann dann durch die Positioniereinheit selbsttätig ausgeglichen werden. Es kann darüber hinaus sinnvoll sein, die automatische Positionierung mit einer manuellen Korrektur zu kombinieren, um zum Beispiel bei der Bearbeitung mit einer Stichsäge eine Abweichung von der Bearbeitungsmarkierung einerseits sofort auszugleichen und andererseits die Abweichung anzuzeigen. Dadurch wird verhindert, dass der Benutzer bei der weiteren Bearbeitung eine noch größere Abweichung von der Bearbeitungsmarkierung herbeiführt. Dies stellt sicher, dass Einstellgrenzen der Positioniereinheit, die je nach konkreter Ausgestaltung der Handwerkzeugmaschine unterschiedlich groß sein können, nicht erreicht werden, weil der Benutzer die zusätzliche Rückmeldung für die manuelle Korrektur erhält.

Die zu erfassenden Bearbeitungsmarkierungen können abhängig von der Bearbeitung entweder einen Bearbeitungspunkt oder eine Bearbeitungslinie markieren, was für die Korrektur der Position keine Auswirkungen hat.

Die Handwerkzeugmaschinen können mit einem Gleitschuh ausgeführt sein, mit dem sie auf dem Werkstück zur Führung aufliegen, wodurch einerseits eine feste Auflage auf dem Werkstück sichergestellt wird und andererseits die Handwerkzeugmaschine leicht auf dem Werkstück verschoben werden kann.

In Ausgestaltung der Erfindung kann die Sensoreinheit eine optische Erkennungseinheit und die Steuereinheit einen Mikrocontroller umfassen. Somit können von der optischen Erkennungseinheit der Handwerkzeugmaschine Bilder aufgenommen werden und die Abweichung anhand der aufgenommenen Bilder berechnet werden. Durch die Bilderfassung und Verarbeitung kann eine auf das Werkstück aufgebrachte Bearbeitungsmarkierung erfasst werden. Derartige Bilderfassungssysteme sind in anderen Bereichen der Technik bereits weit verbreitet und können mit geringem Kostenaufwand bereitgestellt werden. Insbesondere kann die optische Erkennungseinheit derart ausgebildet sein, dass sie ein Bild linienweise aufnimmt, und die Steuereinheit kann derart ausgebildet sein, dass sie die Abweichung basierend auf den einzelnen Linien bestimmt. Diese Art der linienbasierten Auswertung lässt sich auf besonders einfache Weise durchführen und fordert nur geringe Rechenleistung von dem Mikrocontroller. Insbesondere linienförmige Markierungen können auf diese Weise besonders einfach erfasst werden.

Auch kann die optische Erkennungseinheit eine Ringoptik aufweisen. Aufgrund der üblicherweise kurzen Entfernung zwischen dem Werkzeug und dem Werkstück kann diese spezielle Art der Optik zu einer verbesserten Erfassung der Markierung beitragen.

Vorteilhafterweise kann die Sensoreinheit beispielsweise durch eine Steckverbindung abnehmbar an dem Elektrowerkzeug vorgesehen sein. So kann es auf einfache Weise möglich sein, dieselbe Kamera zwischen verschiedenartigen Elektrowerkzeugen auszutauschen, wenn diese über eine passende Steckverbindung verfügen. Da diese Art der Positionierung prinzipiell für verschiedenartige Werkzeuge geeignet ist, können die Werkzeuge jeweils bei Bedarf mit derselben Kamera betrieben werden. Zusätzlich kann die Kamera auf diese Weise für eine leichte Reinigung oder Wartung von dem Elektrowerkzeug abgenommen werden, was aufgrund der häufig spanenden Bearbeitung und den dabei erzeugten umherfliegenden Späne gelegentlich erforderlich sein wird.

Gemäβ der Erfindung weist die Positioniereinheit für jede unabhängige Positionierrichtung einen Stellantrieb und einen korrespondierenden Regler auf. Die Stellantriebe sind dabei vorzugsweise als Servomotor, Schrittmotor oder Piezoaktor ausgeführt, die sich besonders gut für eine akkurate Ansteuerung eignen.

Des Weiteren kann die Signalausgabeeinheit optische Signalausgabemittel umfassen. Aufgrund der durch die Bearbeitung üblicherweise entstehenden Geräuschentwicklung kann so auf eine für den Benutzer zuverlässige Weise die Abweichung optisch angezeigt werden. Die optischen Signalausgabemittel umfassen vorzugsweise LEDs oder ein Display. Auf dem Display kann die Abweichung konkret dargestellt werden, zum Beispiel in der Form eines Zielpunktes und eines Fadenkreuzes oder in der Form von Pfeilen oder Balken, die die Richtung und Größe der Abweichung angeben. LEDs können beispielsweise in den Positionierrichtungen vorgesehen sein, um eine Abweichung in jeder Positionierrichtung anzuzeigen. Ein weiterer Vorteil von LEDs besteht in dem geringen Stromverbrauch, der insbesondere bei akkubetriebenen Werkzeugen von Bedeutung ist.

In besonderer Ausgestaltung der Erfindung kann die Steuereinheit derart ausgebildet sein, dass die Positioniereinheit und eine Bearbeitung durch das Elektrowerkzeug gemeinsam steuerbar sind. Auf diese Weise kann eine automatische Bearbeitung des Werkstücks durchgeführt werden, wobei der Benutzer lediglich für die Positionierung und gegebenenfalls Fixierung der Handwerkzeugmaschine erforderlich ist. So kann zum Beispiel eine Bohrmaschine nach ihrer Positionierung angesteuert werden, um selbständig eine Mehrzahl von Löchern entsprechend bestimmter Vorgaben in das Werkstück zu bohren, ohne dass die Bohrmaschine für jedes Loch neu positioniert werden muss. Auch das automatische Aussägen von Löchern mit einer Stichsäge ist dadurch möglich. Bei der Bohrmaschine ist es erforderlich, neben der Positionierung auf dem Werkstück auch eine Positionierung in der Achse senkrecht zum Werkstück durchzuführen, um die Löcher bohren zu können. Dies wird durch die Implementierung einer weiteren Positionierrichtung in der Positioniereinheit ermöglicht. Besondere Bedeutung hat die gemeinsame Ansteuerung der Positioniereinheit und der Bearbeitung bei Werkzeugen, die nur punktuell arbeiten. Hierzu gehören zum Beispiel der Tacker und das Punktschweißgerät. Aber auch zum Beispiel bei der Bohrmaschine ist eine gezielte Ansteuerung des Bohrers notwendig, um einerseits ein mögliches Verletzungsrisiko zu minimieren, wenn die Bohrmaschine nicht auf dem Werkstück positioniert ist, und andererseits durch den gezielten Antrieb des Bohrers nur bei Bedarf Geräusche und, insbesondere beim Akkubetrieb, den Stromverbrauch zu minimieren. Gegebenenfalls kann, wie zum Beispiel im Fall eines Gewindebohrers, eine präzise Richtungsansteuerung für die Bearbeitung zwingend erforderlich sein, um die Bearbeitung korrekt durchzuführen.

Auch kann die Handwerkzeugmaschine eine Zielvorrichtung umfassen, mit der auf dem Werkstück der Bereich, der von der Sensoreinheit erfassbar ist, markierbar ist. Diese kann zum Beispiel in der Form einer optischen Visiereinrichtung oder in der Art einer Schablone, die auf dem Werkstück geführt wird, ausgeführt sein, wobei innerhalb dieser Markierung die Soll-Position auf dem Werkstück erfassbar ist. Vorzugsweise umfasst die Zielvorrichtung wenigstens ein Leuchtelement und der Bereich, in dem die Markierung von der Sensoreinheit erfassbar ist, ist durch abgestrahltes Licht des Leuchtelements markierbar. Aufgrund des geringen Stromverbrauches kann das Leuchtelement insbesondere in der Form von wenigstens einer LED ausgeführt sein. Die Markierung mit Licht kann dabei zum Beispiel aus einer Beleuchtung des Bereichs des Werkstücks bestehen, der von der Sensoreinheit erfassbar ist. Durch die Beleuchtung wird gleichzeitig die Erfassung durch die Sensoreinheit verbessert, da eine unzureichende Beleuchtung oder eine mögliche Beschattung durch die Handwerkzeugmaschine selbst ausgeglichen wird. Eine Markierung in der Form eines Leuchtrahmens auf dem Werkstück, insbesondere in einer leicht wahrnehmbaren Farbe, ist ebenfalls möglich, um den Bereich auf diesem zu markieren.

Zusätzlich kann die Zielvorrichtung mit einer Markierungseinrichtung für die Markierung der bevorzugten Verschieberichtung der Handwerkzeugmaschine ausgeführt sein. Auf einfache Weise kann dies z.B. durch eine besonders geformte Markierung für die Erfassung der Soll-Position durchgeführt werden, wenn diese Beispielsweise als Dreieck ausgebildet ist, wobei eine Ecke des Dreiecks die bevorzugte Verschieberichtung markiert. Dadurch kann sich der Benutzer vollständig auf die Bedienung der Handwerkzeugmaschine konzentrieren und er muss die Markierung für die Bearbeitung nicht zusätzlich beobachten. Dies kann insbesondere bei einer linienförmigen Bearbeitung hilfreich sein.

In weiterer Ausgestaltung der Erfindung kann die Handwerkzeugmaschine Wegerfassungsmittel für das Erfassen einer Verschiebung der Handwerkzeugmaschine auf dem Werkstück aufweisen. Damit kann beispielsweise eine regelmäßige Bearbeitung des Werkstückes in vorgegebenen Abständen entlang einer Linie, durchgeführt werden, ohne dass jede Bearbeitungsstelle einzeln auf dem Werkstück markiert werden muss. Es reicht bereits aus, wenn die Linie, entlang derer die regelmäßige Bearbeitung erfolgen soll, markiert ist, gegebenenfalls zusammen mit einem Startpunkt. Auch kann die Markierung des Werkzeuges dadurch wesentlich vereinfacht werden, weil bei einer nicht regelmäßigen Bearbeitung der Benutzer selbständig über die Bearbeitung entscheiden kann, wenn ihm der zurückgelegte Verschiebeweg signalisiert wird.

Auch kann an der Handwerkzeugmaschine im Kontaktbereich zu dem Werkstück ein mechanisches Führungselement vorgesehen sein, dass in einer Nut oder Rille des Werkstücks eingreifbar oder an einer Kante des Werkstücks anlegbar ist. Dadurch kann zum Beispiel entlang einer Kante des Werkstücks gearbeitet werden, was in der Praxis sehr häufig erforderlich ist, wobei die Kante nicht extra markiert werden muss und deshalb eine sehr präzise Markierung darstellt. Im Falle einer Stichsäge kann zum Beispiel eine Art Finne in der Verschieberichtung hinten am Werkzeug vorgesehen sein, um die seitliche Führung zu verbessern. Die Finne kann in die durch das Sägen gebildete Aussparung eingreifen und ein seitliches Verschieben der Handwerkzeugmaschine verhindern. Dadurch wird eine schnellere Bearbeitung des Werkstücks möglich und Korrekturen der Position sind in einem geringeren Maße erforderlich. Dazu ist das mechanische Führungselement vorzugsweise mit einer Federvorrichtung versenkbar an der Handwerkzeugmaschine gehalten. So kann zum Beispiel mit der Stichsäge die Bearbeitung innerhalb einer Fläche des Werkstücks begonnen werden, wobei die Finne in dem Werkzeug versenkt ist. Sobald ein ausreichend großes Stück gesägt wurde, kann die Finne aus dem Werkzeug federn und in den durch das Sägen gebildeten Schnitt eingreifen. Auch kann das mechanische Führungselement lösbar mit der Handwerkzeugmaschine verbunden sein, wodurch die Führung abhängig von konkreten Erfordernissen für die Bearbeitung oder Vorgaben durch das Werkstück angepasst werden kann. So erfordern zum Beispiel breitere Schnitte durch die Verwendung von breiteren Sägeblättern oder breiteren Fräsern breitere Führungselemente, um eine präzise Führung zu ermöglichen, und umgekehrt. Dies kann durch den Austausch der Finne erreicht werden.

Bei einer besonderen Ausführungsform sind an der Handwerkzeugmaschine Haftelemente mit Gummi- oder Reibebelägen derart vorgesehen, dass sie zwischen einer ersten Position, in der sie nicht am Werkstück anliegen, und einer zweiten Position, in der sie am Werkstück anliegen, bewegbar sind. So können beispielsweise Haftelemente in dem Gleitschuh vorgesehen sein, die für eine Bearbeitung an einer festen Position aus dem Schuh hervorgeschoben werden, und ansonsten in dem Schuh versenkt sind. Dies führt zu einer Art Aufbocken der Handwerkzeugmaschine, da der Kontakt mit dem Werkstück lediglich über die Haftelemente hergestellt wird. Die Handwerkzeugmaschine kann dann durch das Pressen der Haftelemente gegen das Werkstück an diesem fixiert werden. Die Haftelemente können aber auch verschwenkbar an der Handwerkzeugmaschine gehalten sein, so dass sie aus einer Position, in der sie nicht an dem Werkstück anliegen, in eine Position, in der sie an dem Werkstück anliegen, verschwenkt werden können. Diese konkrete Ausgestaltung ist dabei ausschließlich abhängig von der Art des Werkzeuges und der Art des Werkstücks.

In besonderer Ausgestaltung der Erfindung kann das wenigstens eine Haftelement ein elektromagnetisches Element umfassen und die Handwerkzeugmaschine durch das Anlegen eines elektromagnetischen Feldes gegen das Werkstück pressbar sein. Wenn magnetische Werkstücke mit der Handwerkzeugmaschine bearbeitet werden, kann beispielsweise durch das Anlegen eines elektromagnetischen Feldes mit einem Elektromagneten an der Handwerkzeugmaschine oder kleineren Elektromagneten an den Haftelementen eine Fixierung der Handwerkzeugmaschine am Werkstück erreicht werden. Da hier durch den Magneten selber eine Kraft ausgeübt wird, ist der Benutzer von der Fixierung entlastet.

Eine andere Art der Fixierung besteht darin, dass an der Handwerkzeugmaschine eine Ansaugvorrichtung vorgesehen ist, mit der in dem Kontaktbereich zwischen der Handwerkzeugmaschine und dem Werkstück ein Unterdruck aufbaubar ist. Dazu kann der Ansaugvorrichtung eine externe Unterdruckpumpe für die Erzeugung des Unterdrucks zugeordnet sein. So kann beispielsweise in einem Bereich des Gleitfußes zwischen dem Werkstück und der Handwerkzeugmaschine der Unterdruck aufgebaut werden, was insbesondere bei glatten Werkstücken leicht möglich ist. Vorzugsweise wird der Bereich des Unterdrucks von einer Gummidichtung umgeben, so dass der Unterdruck auf einfache Weise aufrecht erhalten werden kann, ohne dass die Unterdruckpumpe kontinuierlich arbeiten muss.

In weiterer Ausgestaltung der Erfindung kann die Ansaugvorrichtung einen Umkehrbetrieb aufweisen, indem sie einen Überdruck erzeugt. Dadurch kann in einem Kontaktbereich zwischen Handwerkzeugmaschine und Werkstück ein Überdruck erzeugt werden und die Handwerkzeugmaschine auf einem sich bildenden Luftpolster auf dem Werkstück verschoben werden. Hierdurch erfährt der Gleitschuh einen geringeren Widerstand beim Gleiten auf dem Werkstück, was die Bearbeitung des Werkstücks weiter vereinfacht.

Zusätzlich kann die Handwerkzeugmaschine im Kontaktbereich zum Werkstück Rollen aufweisen. Mit den Rollen kann das Werkzeug mit einer hohen Richtungspräzision auf dem Werkstück verschoben werden. Dazu sind die Rollen vorzugsweise aus einem gummiartigen Material hergestellt, wodurch die Haftung der Rollen auf dem Werkstück erhöht wird. Insbesondere bei glatten, zum Beispiel metallischen Werkstücken, wird dadurch die Haftung auf dem Werkstück deutlich verbessert. Die Verwendung wenigstens einer Rolle als Wegerfassungsmittel für die Verschiebung der Handwerkzeugmaschine ist ebenfalls denkbar.

Auch können die Rollen über die Steuereinheit antreibbar sein. Somit kann die Handwerkzeugmaschine durch das Antreiben der Rollen auf dem Werkstück verschoben werden, was einen weiteren Freiheitsgrad für die Bearbeitung des Werkstückes liefert. Die Verschiebung des Werkzeuges wird zusammen mit der Bearbeitung von der Steuereinheit koordiniert. Dazu kann es auch sinnvoll sein, dass die Fixierung des Werkzeuges auf dem Werkstück, zum Beispiel über die Ansteuerung der Elektromagnete oder die Aktivierung der Unterdruckerzeugung, mit der Verschiebung des Werkzeuges koordiniert wird, so dass das Werkzeug quasi autonom die Bearbeitung vornehmen kann. Durch das Drehen der Rollen kann auch die Verschieberichtung des Werkzeuges beeinflusst werden, so dass näherungsweise beliebige Bearbeitungen des Werkstücks möglich sind.

Schließlich kann an der Handwerkzeugmaschine eine Schnittstelle für den Datenaustausch vorgesehen sein. Über die Schnittstelle können jeweils benötigte Steuerungsbefehle z.B. von einer externen Datenverarbeitungseinrichtung zu dem Elektrowerkzeug übertragen werden, so dass eine hohe Flexibilität bei der Bearbeitung möglich ist. Auch die Übertragung von zu Programmen zusammengefassten Gruppen von Steuerbefehlen ist möglich. Abhängig von der gewünschten Bearbeitung muss lediglich das jeweils erforderliche Programm an die Handwerkzeugmaschine übertragen werden. Prinzipiell ist es auch möglich, eine Mehrzahl von Programmen in der Handwerkzeugmaschine zu speichern, jedoch sind die Speichermöglichkeiten üblicherweise begrenzt und das Bedieninterface ist entsprechend der Größe der Handwerkzeugmaschinen üblicherweise klein. Deshalb ist zwar prinzipiell auch eine Auswahl oder sogar das Erstellen von Programmen an der Handwerkzeugmaschine selber möglich, jedoch ist dies nicht mit einem ausreichenden Komfort durchführbar. Deshalb werden die Programme vorzugsweise über die externe Datenverarbeitungsvorrichtung erstellt und ausgewählt, so dass mit der Handwerkzeugmaschine nur noch die Bearbeitung umgesetzt werden muss. Im Übrigen können über die Schnittstelle auch weitere Informationen, wie zum Beispiel während der Bearbeitung zurückgelegte Weglängen, Serviceinformationen über den Zustand des Werkzeuges oder gegebenenfalls auch aktuelle Betriebszustände abgefragt werden. Für die Schnittstelle ist es dabei unerheblich, wie sie physikalisch ausgeprägt ist, jedoch erhöht eine drahtlose Schnittstelle aufgrund der mit den Handwerkzeugmaschinen durchgeführten Art der häufig trennenden oder spannenden Bearbeitung und der Verwendung in einer solchen Arbeitsumgebung die Sicherheit der Datenübertragung. Ferner kann eine Beschädigung oder Durchtrennung eines für die Datenübertragung verwendeten Kabels vermieden werden.

Ein entsprechendes Positionierverfahren für die zuvor beschriebene Handwerkzeugmaschine ergibt sich aus den nachfolgenden Details mit dem Vorteil, dass die Handwerkzeugmaschine sicher, präzise und zeitsparend handhabbar ist.

Dabei wird die Soll-Position der Handwerkzeugmaschine auf einem zu bearbeitenden Werkstück über eine Bearbeitungsmarkierung definiert und von der Handwerkzeugmaschine erfasst. Eine Abweichung der Ist-Position von der Soll-Position wird ermittelt und sodann von der Handwerkzeugmaschine automatisch korrigiert. Zusätzlich können entsprechende, die ermittelte Abweichung repräsentierende Signale an einen Benutzer ausgegeben werden, bis dieser die Abweichung manuell behoben hat.

Dabei können mittels der Handwerkzeugmaschine Bilder aufgenommen und Positionsabweichungen von der Bearbeitungsmarkierung anhand der aufgenommen Bildern bestimmt werden. Dabei kann jedes Bild in einzelne Bildzeilen zerlegt und die Abweichung von der Bearbeitungsmarkierung durch die Analyse der Bildzeilen ermittelt werden.

Nach korrekter Positionierung und Startbefehl ist sodann durch die Handwerkzeugmaschine eine Bearbeitung des Werkstücks selbständig durchführbar.

Für die Bearbeitung des Werkstücks kann die Handwerkzeugmaschine senkrecht dazu bewegt werden. Dabei wird die Abweichung von der Bearbeitungsmarkierung insbesondere Größe und Richtung der Abweichung optisch angezeigt.

Mittels der Handwerkzeugmaschine wird der Bereich des Werkstücks markiert, in dem die Bestimmung der Soll-Position durchführbar ist. Dabei kann dieser Bereich mit Licht markiert werden, wobei über dies zusätzlich eine bevorzugte Verschieberichtung an der Handwerkzeugmaschine markiert werden kann. Dabei kann eine Verschiebung der Handwerkzeugmaschine auf dem Werkstück erfasst werden.

Weiter wird die Handwerkzeugmaschine mit einem mechanischen Führungselement in einer Vertiefung oder an einer Kante des Werkstücks geführt, wobei das mechanische Führungselement abhängig von dem Werkstück und/oder der Bearbeitung ausgetauscht wird.

Das mechanische Führungselement ist in der Handwerkzeugmaschine versenkbar und wird durch Federkraft beim Erreichen der Vertiefung in diese hineingedrückt. Weiter kann die Handwerkzeugmaschine über Haftelemente mit Gummi- oder Reibebelägen gegen das Werkstück gepresst und daran fixiert werden.

In anderen Verfahrensvarianten wird die Handwerkzeugmaschine durch das Anlegen eines elektromagnetischen Feldes oder durch das Erzeugen eines Unterdrucks am Werkstück fixiert. Dabei kann der Unterdruck von einer internen oder einen externen, nicht zur Handwerkzeugmaschine gehörenden Pumpe erzeugt werden.

Darüber hinaus kann in einem Kontaktbereich zwischen Handwerkzeugmaschine und Werkstück ein Überdruck erzeugt und die Handwerkzeugmaschine auf einem sich bildenden Luftpolster auf dem Werkstück verschoben werden und/oder über frei drehende oder definierte angetriebene Rollen auf dem Werkstück verschoben werden.

Weiter können der Handwerkzeugmaschine über eine Steuerschnittstelle Steuerbefehle für die Bearbeitung des Werkstücks übermittelt werden.

### Zeichnung

Nachfolgend werden bevorzugte Ausführungsformen der vorliegenden Erfindung unter Bezugnahme auf die beiliegende Zeichnung beschrieben. Darin ist:
- Figur 1: eine Seitenansicht einer erfindungsgemäßen Handfräse,
- Figur 2: eine Ansicht der Fräse aus Figur 1 von unten,

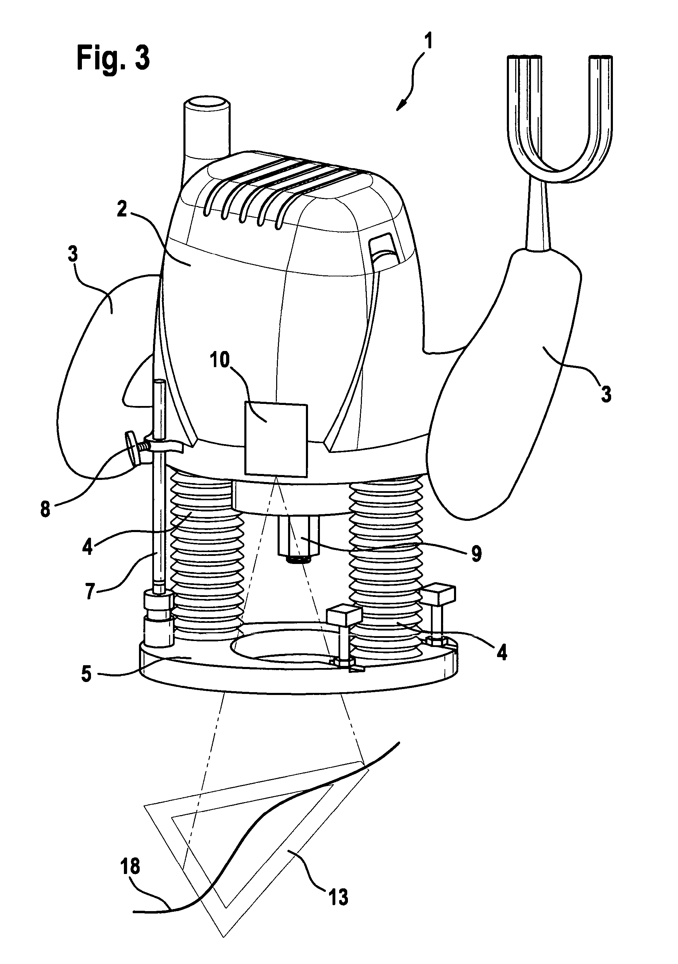

- Figur 3: eine perspektivische Ansicht der in Figur 1 dargestellten Fräse, die über einerBearbeitungsmarkierung angeordnet ist,
- Figur 4: eine Unteransicht eines Gleitschuhs einer Fräse mit Rollen gemäß einer zweiten Ausführungsform der Erfindung, und
- Figur 5: eine Ansicht eines Fadenkreuzes zur Verwendung als Bearbeitungsmarkierung.

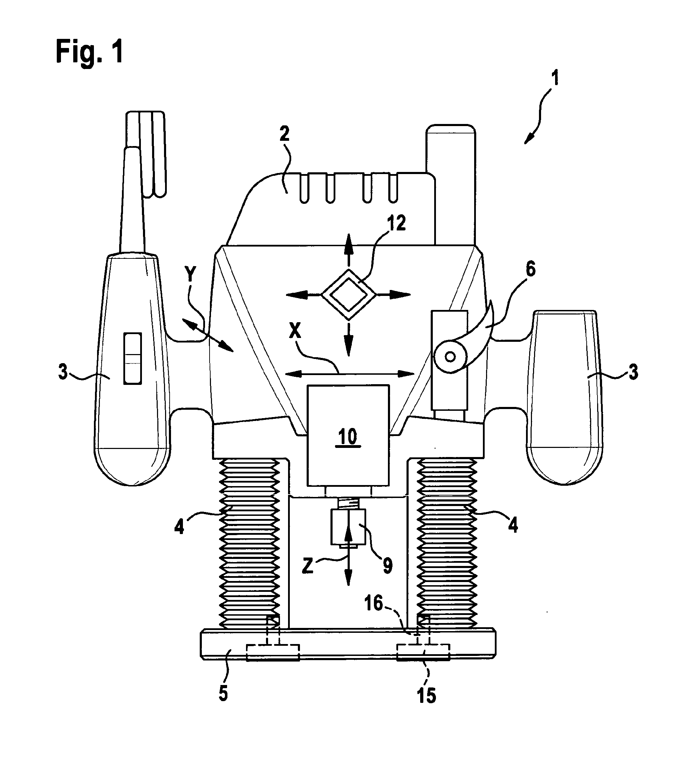

Figur 1 zeigt eine als Fräse 1 gemäß einer ersten Ausführungsform der vorliegenden Erfindung ausgestaltete Handwerkzeugmaschine. Die Fräse 1 umfasst einen Grundkörper 2 mit seitlich daran vorgesehenen Haltegriffen 3, zwei an der Unterseite des Grundkörpers 2 seitlich vorgesehenen längenverstellbaren Beinen, die sich senkrecht nach unten erstrecken und von je einem Falkenbalg 4 umgeben sind, und einem am unteren Ende der Beine vorgesehenen kreisförmigen Gleitschuh 5. Des Weiteren befindet sich an dem Grundkörper 2 ein Fixierhebel 6, über den die Beine relativ zu dem Grundkörper 2 arretierbar sind, sowie ein höhenverstellbarer Anschlag 7, der über eine Arretierschraube 8 fixierbar ist und eine Bewegung des Gleitschuhs 5 in Richtung zu dem Grundkörper 2 begrenzt.

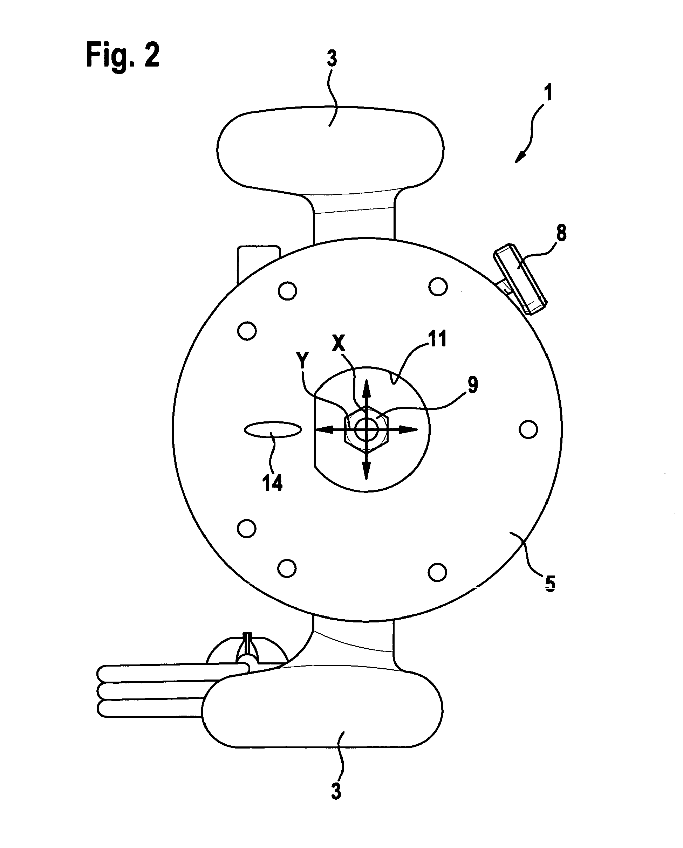

An der Unterseite des Grundkörpers 2 ist ein Fräserhalter 9 für die Aufnahme eines nicht gezeigten Fräsers vorgesehen. Der Fräserhalter 9 ist, wie in Figur 2 zu sehen ist, entlang der Pfeilrichtungen X, Y parallel zu der Ebene des Gleitschuhs 5 verschiebbar an dem Grundkörper 2 gehalten. Zusätzlich ist der Fräserhalter 9 in einer Pfeilrichtung Z senkrecht zu dem Gleitschuh 5 bewegbar. Dazu sind innerhalb des Grundkörpers 2 nicht gezeigte elektrische Servomotoren vorgesehen, über welche die jeweilige Position des Fräserhalters 9 exakt in allen drei Pfeilrichtungen X, Y, Z unabhängig einstellbar ist. An dem Grundkörper 2 ist eine auf den Boden gerichtete Kamera 10 als Sensoreinheit vorgesehen. Die Kamera 10 ist so ausgeführt, dass Bilder linienweise erfasst werden. Als Optik ist in der Kamera 10 eine nicht näher gezeigte Ringoptik verwendet.

Die Kamera 10 ist so ausgerichtet, dass sie durch eine Aussparung 11 in dem Gleitschuh 5 den darunter liegenden Bereich eines Werkstücks erfasst. An dem Grundkörper 2 ist als Signalausgabeeinheit eine quadratische Leuchtanzeige 12 vorgesehen, deren Ecken sich jeweils paarweise in horizontaler bzw. vertikaler Richtung gegenüberliegen, wobei in jeder Ecke eine nicht gezeigte LED vorgesehen ist, die unabhängig ansteuerbar ist. Der Kamera 10 ist eine nicht näher gezeigte Zielvorrichtung beigeordnet, die eine dreieckförmige Zielmarkierung 13 durch die Aussparung 11 des Gleitschuhs hindurch auf das Werkstück projiziert. Die dreieckige Zielmarkierung 13 ist dabei mit zwei gleich großen Innenwinkeln und einem kleineren Innenwinkel ausgebildet, so dass der kleinere Innenwinkel gleichzeitig eine bevorzugte Verschieberichtung auf dem Werkstück markiert. Durch die seitliche Anordnung der beiden Haltegriffe 3 an dem Grundkörper 2 ergibt sich automatisch die bevorzugte Verschieberichtung aus der natürlichen Haltung der Fräse 1 durch den Benutzer vor sich mit zwei Händen, so dass er die Fräse 1 in der eingezeichneten Pfeilrichtung Y von sich wegschiebt.

Innerhalb des Grundkörpers 2 ist außerdem eine nicht weiter gezeigte Steuereinheit vorgesehen, die auf ihrer Eingangsseite mit der Kamera 10 verbunden ist. Ausgangsseitig ist die Steuereinheit mit drei Reglern, welche die Positionierung des Fräserhalters 9 in den Richtungen X, Y, Z regeln, und mit der Anzeige 12 verbunden. Zusätzlich ist die Steuereinheit mit einem weiteren Regler für den Antrieb der Drehung des Fräserhalters verbunden. Die Ansteuerung der Regler erfolgt dabei basierend auf den verarbeiteten Kamerasignalen. Die Steuereinheit ist als Mikrocontroller ausgeführt und verfügt über eine Schnittstelle zum Datenaustausch. Die Schnittstelle ist schnurlos und nicht sichtbar ausgeführt.

An dem Gleitschuh 5 ist an der Unterseite ein mechanisches Führungselement in der Form einer Finne 14 vorgesehen, die federnd an dem Gleitschuh 5 gehalten ist. Die Federung ist so ausgeführt, dass die Finne 14 in einer Richtung senkrecht zu dem Gleitschuh 5 bewegbar ist. Die Finne 14 ist in Y-Richtung länglich ausgeführt, so dass die Finne 14 mit der bevorzugten Verschieberichtung der Fräse 1 übereinstimmt. Die Finne 14 ist austauschbar an dem Gleitschuh 5 gehalten, um abhängig von dem verwendeten Fräser eine Finne 14 mit einer damit korrespondierender Breite verwenden zu können.

Des weiteren sind in dem Gleitschuh 5 zwei Gummielemente 15 vorgesehen, die an Führungen 16 gehalten sind. Die Gummielemente 15 sind über die Führungen 16 senkrecht zum Gleitschuh 5 verstellbar und vollständig darin versenkbar. Die Verstellung der Gummielemente 15 ist über die Steuereinheit steuerbar.

Für den Betrieb der Fräse 1 gibt es zwei prinzipiell unterschiedliche Möglichkeiten. Zunächst kann die Fräse 1 als Bohrer verwendet werden, da aufgrund der hohen Drehgeschwindigkeiten insbesondere in weichem oder fasrigen Material ein Ausreißen der Bohrlöcher im Vergleich zum Bohren mit einer Bohrmaschine verhindert wird. Dazu wird auf dem Werkstück zunächst an der Stelle des zu bohrenden Lochs eine fadenkreuzförmige Markierung 17 angebracht. Dann wird die Fräse 1 auf dem Werkstück positioniert und die Steuereinheit bestimmt anhand von Signalen, die von der Kamera 10 übermittelt werden, eine Abweichung der aktuellen Ist-Position des Fräsers von der Markierung 17 der Soll-Position. Dazu wird das Bild der Kamera 10 in der Steuereinheit linienweise ausgewertet und die Abweichung basierend auf dieser Auswertung bestimmt. Dem Benutzer hilft dabei die Zielmarkierung 13, mit der er die Markierung 17 in den Bereich bringen kann, der von der Kamera 10 der Fräse 1 erfassbar ist.

Wenn die Markierung 17 nicht erfasst werden kann, gibt die Fräse 1 dies als Fehler aus, indem alle vier LEDs der Anzeige 12 gleichzeitig blinken. Wenn die Markierung 17 erfasst wird, aber außerhalb des Einstellbereichs des Fräserhalters 9 liegt, wird die Richtung der notwendigen Verschiebung der Fräse 1 durch den Benutzer über die entsprechenden LEDs der Anzeige 12 signalisiert. Die Leuchtstärke der LEDs korrespondiert dabei mit der Entfernung von der Markierung 17.

Sobald die Markierung 17 im Verstellbereich des Fräserhalters 9 liegt, erlöschen die LEDs der Anzeige 12 und der Nutzer kann die Bearbeitung durch einen Tastendruck auf einen nicht gezeigten Taster starten. Die Steuereinheit fährt die Gummielemente 15 aus dem Gleitschuh 5 aus, so dass die Fräse 1 nicht mehr verschiebbar ist. Anhand des von der Kamera 10 aufgenommenen Bildes wird nun exakt die Position der Markierung 17 bestimmt und der Fräserhalter 9 in der durch die X- und Y-Richtung aufgespannten Ebene positioniert. Dazu werden von der Steuereinheit die Servoantriebe anhand der berechneten Abweichung über die Regler angesteuert. Dann steuert die Steuereinheit den Fräserhalter 9 mit dem daran gehaltenen Fräser in Z-Richtung senkrecht zum Werkstück und startet gleichzeitig den rotierenden Antrieb des Fräserhalters 9, so dass an der Stelle der Markierung 17 das gewünschte Loch gebohrt wird. Im Anschluss wird der Fräser von der Steuereinheit aus dem gebohrten Loch herausgefahren, der rotierende Antrieb wird gestoppt und die Gummielemente 15 werden versenkt, so dass die Fräse 1 wieder für die Benutzer bereitsteht und verschoben werden kann.

Für die Benutzung von unterschiedlich großen und insbesondere unterschiedlich langen Fräsern können die Beine in ihrer Länge verstellt werden. Dazu wird der Fixierhebel 6 gelöst und der Grundkörper 2 senkrecht zu dem Gleitschuh 5 bewegt. Anschließend werden die Beine durch Umlegen des Fixierhebels 6 in ihrer aktuellen Position fixiert. Über den Anschlag 7 wird ebenfalls die Länge des Fräsers berücksichtigt und ein zu tiefes Bohren verhindert. So kann durch Verstellen des Anschlags 7 die gewünschte Bohrtiefe eingestellt werden, wenn dies nicht bereits über einen Parameter der Steuereinheit mitgeteilt wurde. Der Anschlag 7 kann durch Betätigen eines Schalters oder elektrischen Kontaktes das Endsignal für die Bearbeitung in Z-Richtung an die Steuereinheit erzeugen.

Das automatische Bohren ist aber nicht auf das Bohren eines einzelnen Lochs beschränkt. So können auch an dem Ort der Markierung 17 mehrere Löcher in einer bestimmten vorgegebenen Anordnung in das Werkstück gebohrt werden. Der Benutzer muss dazu nichts weiter tun, als einmal den Bohrvorgang zu starten und anschließend die Fräse 1 an der Position zu halten. Die Steuereinheit führt das Bohren der einzelnen Löcher wie oben beschrieben automatisch nacheinander durch.

Die zweite Betriebsart ist das Fräsen einer Nut. Dabei ist auf dem Werkstück eine linienförmige Markierung 18 vorgesehen, entlang derer die Bearbeitung durchgeführt wird. Auch hier wird zunächst die Fräse 1 grob ausgerichtet, wie es für das Bohren eines Lochs erforderlich ist. Dann wird die Steuereinheit aktiviert, so dass sie den rotierenden Antrieb des Fräserhalters 9 startet und den Fräserhalter 9 auf der Markierungslinie 18 positioniert. Der Fixierhebel 6 befindet sich in seiner gelösten Position, so dass der Grundkörper 2 relativ zu dem Gleitfuß 5 bewegbar ist. Der Anschlag 7 ist so positioniert, dass der Fräser in das Werkstück eindringen kann, um die Nut in der gewünschten Tiefe zu fräsen. Die Zielmarkierung 13 gibt dem Nutzer die bevorzugte Verschieberichtung in der Y-Achse an, so dass dieser die Bearbeitung entlang der Linie 18 starten kann. Beim Verschieben der Fräse 1 wird kontinuierlich von der Kamera 10 ein Bild von der Markierung 18 aufgenommen und von der Steuereinheit wird die Abweichung der aktuellen Position von der durch die Markierung 18 definierten Soll-Position ermittelt. Der Fräserhalter 9 wird anhand dieser Abweichung in X-Richtung quer zur Verschieberichtung Y der Fräse 1 gesteuert. Zusätzlich wird dem Benutzer die Abweichung über die Anzeige 12 angezeigt, so dass er die Abweichung manuell ausgleichen kann. Entsprechend wird auch hier lediglich die Abweichung in Y-Richtung durch die zwei LEDs angezeigt, die sich horizontal gegenüberliegen.

Beim Fräsen der Nut dient zusätzlich die Finne 14 als Führungselement für den Gleitschuh 5. Die Finne 14 ist zunächst in dem Gleitschuh 5 versenkt. Wenn das Fräsen der Nut gestartet wird und die Nut bereits teilweise ausgebildet ist, federt die Finne 14 aus dem Gleitschuh 5 heraus und greift in die Nut ein. Dadurch wird die Fräse 1 zusätzlich in der Verschieberichtung Y stabilisiert.

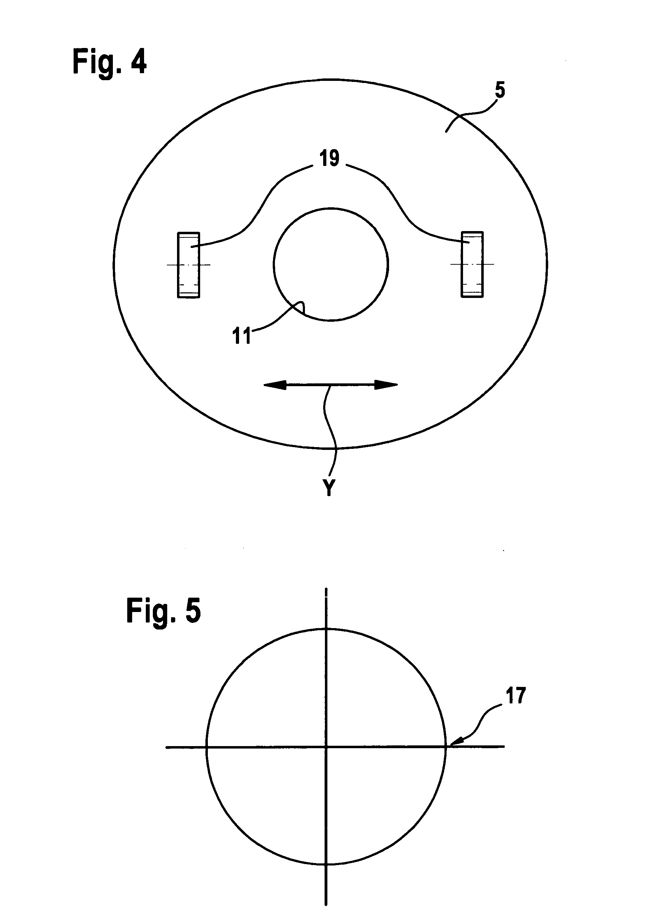

In einer zweiten Ausführungsform der vorliegenden Erfindung, die in Figur 4 gezeigt ist, sind an dem Gleitschuh 5 zwei Rollen 19 vorgesehen, die sich in der Ebene des Gleitschuhs 5 in X-Richtung erstrecken. Dadurch ist der Gleitschuh 5 auf den Rollen in Y-Richtung verschiebbar. Die Rollen 19 sind des Weiteren mit einem nicht gezeigten Elektroantrieb versehen, der über die Steuereinheit angesteuert wird.

Die Rollen 19 erleichtern das Fräsen einer Nut entlang einer geraden Linie, da sie eine Abweichung von dieser Linie verhindern. Gleichzeitig können die Rollen 19 in einem nicht angetriebenen Modus dazu dienen, die Verschiebung der Fräse 1 mit dem Gleitschuh 5 auf dem Werkstück in Y-Richtung zu erfassen, indem die Umdrehungen der Rollen 19 erfasst werden. Dazu ist die Anzeige 12 an der Fräse 1 erweitert, so dass sie zusätzlich den zurückgelegten Verschiebeweg anzeigt. So kann der Benutzer entlang der Linie Löcher in fest definierten Abständen bohren, ohne jedes Loch einzeln aufwendig zu markieren. Dieser Vorgang kann auch automatisch durchgeführt werden, indem die Steuereinheit die Rollen 19 jeweils antreibt, um den gewünschten Verschiebeweg entlang der Linie zurückzulegen. Dann kann darüber hinaus direkt von der Steuereinheit das Bohren des Lochs an der gewünschten Position gestartet werden, sobald die Fräse 1 diese Position erreicht.

Über die Schnittstelle für den Datenaustausch kann die Fräse 1 z.B. mit einem Laptop verbunden werden, von dem die jeweils benötigten Steuerungsprogramme zu der Fräse 1 übertragen werden. Damit kann die Fräse 1 innerhalb von kurzer Zeit verschiedenartige Bearbeitungen durchführen, und auch auf einfache Weise von dem Bohren von Löchern zu dem Fräsen von Nuten wechseln.

## Patentansprüche

1. Handwerkzeugmaschine (1) mit einem Werkzeug, sowie mit einer Sensoreinheit, die derart ausgebildet ist, dass sie eine auf einem mit Hilfe der Handwerkzeugmaschine (1) zu bearbeitenden Werkstück vorgesehene Bearbeitungsmarkierung (17, 18), die eine Soll-Position der Handwerkzeugmaschine (1) definiert, erfassen kann, wobei die Handwerkzeugmaschine eine Steuereinheit aufweist, die basierend auf dem Signalausgang der Sensoreinheit eine Abweichung der Ist-Position des Werkzeuges von der Soll-Position des Werkzeuges ermittelt wobei eine Positioniereinheit vorgesehen ist, die derart ausgebildet ist, dass sie eine automatische Korrektur des Werkzeuges der Handwerkzeugmaschine (1) von der Ist-Position zu der Soll-Position vornimmt, **dadurch gekennzeichnet, dass** die Positioniereinheit für drei unabhängige Positionierrichtungen (X, Y, Z) je einen Stellantrieb und einen korrespondierenden Regler aufweist, wobei die drei Regler die Positionierung des Werkzeuges in den drei Richtungen (X,Y,Z) regeln.

2. Handwerkzeugmaschine (1) gemäß Anspruch 1, **dadurch gekennzeichnet, dass** die Sensoreinheit eine optische Erkennungseinheit (10) und die Steuereinheit einen Mikrocontroller umfasst.

3. Handwerkzeugmaschine (1) gemäß Anspruch 2, **dadurch gekennzeichnet, dass** die optische Erkennungseinheit (10) derart ausgebildet ist, dass sie ein Bild linienweise aufnimmt, und die Steuereinheit derart ausgebildet ist, dass sie die Abweichung basierend auf den einzelnen Linien bestimmt.

4. Handwerkzeugmaschine (1) gemäß einem der Ansprüche 2 oder 3, **dadurch gekennzeichnet, dass** die optische Erkennungseinheit (10) eine Ringoptik aufweist.

5. Handwerkzeugmaschine (1) nach einem der vorhergehenden Ansprüche, **dadurch gekennzeichnet, dass** die Sensoreinheit abnehmbar an der Handwerkzeugmaschine (1) vorgesehen ist.

6. Handwerkzeugmaschine (1) gemäß einem der vorhergehenden Ansprüche, **dadurch gekennzeichnet, dass** die Signalausgabeeinheit optische Signalausgabemittel (10) umfasst.

7. Handwerkzeugmaschine gemäß Anspruch 6, **dadurch gekennzeichnet, dass** die optischen Signalausgabemittel (10) LEDs oder ein Display umfassen.

8. Handwerkzeugmaschine (1) gemäß einem der vorergehenden Ansprüche, **dadurch gekennzeichnet, dass** die Steuereinheit derart ausgebildet ist, dass die Positioniereinheit und eine Bearbeitung durch die Handwerkzeugmaschine (1) gemeinsam steuerbar sind.

9. Handwerkzeugmaschine (1) gemäß einem der vorhergehenden Ansprüche, **dadurch gekennzeichnet, dass** die Handwerkzeugmaschtne (1) eine Zielvorrichtung umfasst, mit der auf dem Werkstück der Bereich, der von der Sensoreinheit erfassbar ist, markierbar ist.

10. Handwerkzeugmaschine (1) gemäß Anspruch 9, **dadurch gekennzeichnet, dass** die Zielvorrichtung wenigstens ein Leuchtelement umfasst und der Bereich, in dem die Markierung von der Sensoreinheit erfassbar ist, durch abgestrahltes Licht (13) des Leuchtelements markierbar ist.

11. Handwerkzeugmaschine (1) gemäß einem der Ansprüche 9 oder 10, **dadurch gekennzeichnet, dass** die Zielvorrichtung zusätzlich mit einer Markierungseinrichtung für die Markierung der bevorzugten Verschieberichtung der Handwerkzeugmaschine (1) ausgeführt ist.

12. Handwerkzeugmaschine (1) gemäß einem der vorhergehenden Ansprüche, **dadurch gekennzeichnet, dass** die Handwerkzeugmaschine (1) Wegerfassungsmittel für das Erfassen einer Verschiebung der Handwerkzeugmaschine (1) auf dem Werkstück aufweist.

13. Handwerkzeugmaschine (1) gemäß einem der vorhergehenden Ansprüche, **dadurch gekennzeichnet, dass** an der Handwerkzeugmaschine (1) im Kontaktbereich zu dem Werkstück ein mechanisches Führungselement (14) vorgesehen ist, das in eine Nut oder Rille des Werkstücks eingreifbar oder an einer Kante des Werkstücks anlegbar ist.

14. Handwerkzeugmaschine (1) gemäß Anspruch 13, **dadurch gekennzeichnet, dass** das mechanische Führungselement (14) mit einer Federvorrichtung versenkbar und/oder lösbar an der Handwerkzeugmaschine (1) gehalten ist.

## Claims

1. Portable power tool (1) having a tool and having a sensor unit which is designed in such a manner that it can detect a machining mark (17, 18) which is provided on a workpiece to be machined with the aid of the portable power tool (1) and defines a desired position of the portable power tool (1), the portable power tool having a control unit which determines a deviation of the actual position of the tool from the desired position of the tool on the basis of the signal output from the sensor unit, a positioning unit being provided which is designed in such a manner that it automatically corrects the tool of the portable power tool (1) from the actual position to the desired position, **characterized in that** the positioning unit has an actuator and a corresponding regulator for each of three independent positioning directions (X, Y, Z), the three regulators regulating the positioning of the tool in the three directions (X, Y, Z).

2. Portable power tool (1) according to Claim 1, **characterized in that** the sensor unit comprises an optical recognition unit (10) and the control unit comprises a microcontroller.

3. Portable power tool (1) according to Claim 2, **characterized in that** the optical recognition unit (10) is designed in such a manner that it records an image line by line, and the control unit is designed in such a manner that it determines the deviation on the basis of the individual lines.

4. Portable power tool (1) according to either of Claims 2 and 3, **characterized in that** the optical recognition unit (10) has an annular optical system.

5. Portable power tool (1) according to one of the preceding claims, **characterized in that** the sensor unit is removably provided on the portable power tool (1).

6. Portable power tool (1) according to one of the preceding claims, **characterized in that** the signal output unit comprises optical signal output means (10).

7. Portable power tool according to Claim 6, **characterized in that** the optical signal output means (10) comprise LEDs or a display.

8. Portable power tool (1) according to one of the preceding claims, **characterized in that** the control unit is designed in such a manner that the positioning unit and machining by the portable power tool (1) can be jointly controlled.

9. Portable power tool (1) according to one of the preceding claims, **characterized in that** the portable power tool (1) comprises an aiming device which can be used to mark the region which can be detected by the sensor unit on the workpiece.

10. Portable power tool (1) according to Claim 9, **characterized in that** the aiming device comprises at least one luminous element, and the region in which the mark can be detected by the sensor unit can be marked by means of emitted light (13) from the luminous element.

11. Portable power tool (1) according to either of Claims 9 and 10, **characterized in that** the aiming device is additionally designed with a marking device for marking the preferred direction of displacement of the portable power tool (1).

12. Portable power tool (1) according to one of the preceding claims, **characterized in that** the portable power tool (1) has travel detection means for detecting a displacement of the portable power tool (1) on the workpiece.

13. Portable power tool (1) according to one of the preceding claims, **characterized in that** a mechanical guide element (14) is provided on the portable power tool (1) in the region of contact with the workpiece and can engage in a groove or channel of the workpiece or can be placed on an edge of the workpiece.

14. Portable power tool (1) according to Claim 13, **characterized in that** the mechanical guide element (14) is held on the portable power tool (1) in such a manner that it can be countersunk and/or detached with a spring device.

## Revendications

1. Machine-outil manuelle (1) dotée d'un outil ainsi que d'une unité de détection configurée de manière à pouvoir détecter un repère de traitement (17, 18) prévu sur une pièce qui doit être traitée à l'aide de la machine-outil manuelle (1) et qui définit une position de consigne de la machine-outil manuelle (1),
la machine-outil manuelle présentant une unité de commande qui, sur la base du signal émis par l'unité de détection, détermine l'écart entre la position effective de l'outil et la position de consigne de l'outil,
une unité de positionnement configurée de manière à entreprendre une correction automatique de l'outil de la machine-outil manuelle (1) depuis la position effective jusqu'à la position de consigne étant prévue, **caractérisée en ce que**
l'unité de positionnement présente pour chacune de trois directions indépendantes de positionnement (X, Y, Z) un entraînement de réglage et un régulateur correspondant, les trois régulateurs régulant le positionnement de l'outil dans les trois directions (X, Y, Z).

2. Machine-outil manuelle (1) selon la revendication 1, **caractérisée en ce que** l'unité de détection présente une unité optique de saisie (10) et l'unité de commande un microcontrôleur.

3. Machine-outil manuelle (1) selon la revendication 2, **caractérisée en ce que** l'unité optique de saisie (10) est configurée de manière à enregistrer une image en lignes, l'unité de commande étant configurée de manière à déterminer l'écart sur la base des différentes lignes.

4. Machine-outil manuelle (1) selon l'une des revendications 2 ou 3, **caractérisée en ce que** l'unité optique de saisie (10) présente une optique annulaire.

5. Machine-outil manuelle (1) selon l'une des revendications précédentes, **caractérisée en ce que** l'unité de détection prévue sur la machine-outil manuelle (1) est amovible.

6. Machine-outil manuelle (1) selon l'une des revendications précédentes, **caractérisée en ce que** l'unité d'émission de signaux comporte des moyens (10) d'émission optique de signaux.

7. Machine-outil manuelle selon la revendication 6, **caractérisée en ce que** les moyens (10) d'émission optique de signaux comportent des LED ou un affichage.

8. Machine-outil manuelle (1) selon l'une des revendications précédentes, **caractérisée en ce que** l'unité de commande est configurée de telle sorte que l'unité de positionnement et le traitement par la machine-outil manuelle (1) puissent être commandés conjointement.

9. Machine-outil manuelle (1) selon l'une des revendications précédentes, **caractérisée en ce que** la machine-outil manuelle (1) comporte un dispositif de visée par lequel la partie apte à être saisie par l'unité de détection puisse être repérée sur la pièce.

10. Machine-outil manuelle (1) selon la revendication 9, **caractérisée en ce que** le dispositif de visée comporte au moins un élément d'éclairage et **en ce que** la partie dans laquelle le repère peut être saisi par l'unité de détection peut être repérée par la lumière (13) émise par l'élément d'éclairage.

11. Machine-outil manuelle (1) selon l'une des revendications 9 ou 10, **caractérisée en ce que** le dispositif de visée est de plus équipé d'un système de marquage qui permet de marquer la direction préférée de déplacement de la machine-outil manuelle (1).

12. Machine-outil manuelle (1) selon l'une des revendications précédentes, **caractérisée en ce que** la machine-outil manuelle (1) présente des moyens de saisie de parcours qui permettent de saisir le déplacement de la machine-outil manuelle (1) sur la pièce.

13. Machine-outil manuelle (1) selon l'une des revendications précédentes, **caractérisée en ce qu'**un élément mécanique de guidage (14) qui peut être engagé dans une rainure ou un sillon de la pièce ou qui peut être placé sur une arête de la pièce est prévu sur la machine-outil manuelle (1) dans la partie en contact avec la pièce.

14. Machine-outil manuelle (1) selon la revendication 13, **caractérisée en ce que** l'élément mécanique de guidage (14) est maintenu sur la machine-outil manuelle (1) de manière à pouvoir être abaissé et/ou libéré à l'aide d'un dispositif à ressort.
